# EUROPEAN PATENT APPLICATION

(11) **EP 1 796 054 A1**
(43) Date of publication of application: **13.06.2007**
(21) Application number: 05782090.4
(22) Date of filing: 08.09.2005
(51) Int. Cl.: G08C 13/00

(54) **CHARGING INFORMATION CREATING DEVICE, CHARGING INFORMATION CREATING PROGRAM, CONSIDERATION INFORMATION CREATING DEVICE, AND CONSIDERATION INFORMATION CREATING PROGRAM**

(30) Priority: 29.09.2004 JP 2004285090
(71) Applicant: Brother Kogyo Kabushiki Kaisha, Nagoya-shi, Aichi-ken 467-0841 (JP); Xing Inc., Nagoya-shi, Aichi 4670851 (JP)
(72) Inventor: SUZUKI, Hiroaki Brother Kogyo Kabushiki Kaisha, Nagoya-shi, Aichi 467-561 (JP); USHIYAMA, Kentaro Brother Kogyo Kabushiki Kaisha, Nagoya-shi, Aichi 467-561 (JP); HIBINO, Yoshihiko Brother Kogyo Kabushiki Kaisha, Nagoya-shi, Aichi 467-561 (JP); KIYOHARA, Yuji Brother Kogyo Kabushiki Kaisha, Nagoya-shi, Aichi 467-561 (JP); IIJIMA, Koichi Xing Inc.,, Nagoya-shi, Aichi 467-0851 (JP)
(74) Representative: Kuhnen & Wacker
(86) International application number: PCT/JP2005/016486
(87) International publication number: WO 2006/035578

(57) **Abstract**

Providing a charging information generating apparatus, a charging information generating process program, a consideration information generating apparatus, a consideration information generating process program, and the like capable of generating reliable and certain charging information or consideration information more efficiently.
A charging information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes. The apparatus includes: a log obtaining means for obtaining the log recorded in at least two nodes out of the first, second, and third nodes; a log consistency determining means for determining consistency of the at least two logs obtained; and a charging information generating means, when it is determined that the logs have consistency, for generating charging information to the user of the first node.

## Description

### Technical Field

The present invention relates to a peer-to-peer (P2P) contents distribution system including a plurality of nodes connected to each other via a network and, more particularly, to a technical field of a method of charging use of contents data in a contents distribution system in which a plurality of pieces of contents data are dispersed and stored in a plurality of nodes, and the like.

### Background Art

In a conventional contents distribution system using a computer network, logs (use history information) used for collecting contents fees from the users who downloaded contents data in their terminals (clients) are under centralized-control of, for example, a single charging server. The charging server performs a charging process of calculating the contents fees to charge the users.

Various methods related to such charging process have been proposed. For example, Patent Document 1 discloses a technique of controlling a contents fee on the basis of a use amount recorded in a log generated by the user of the contents.
Patent Document 1: Japanese Patent Laid-open No. 2001-256403

### Disclosure of the Invention

### Problems to be solved by the Invention

However, the conventional method of controlling a log and performing a charging process by a charging server has a problem such that a heavy load is applied on the charging server.

On the other hand, in a peer-to-peer contents distribution system, the frequency of withdrawal (due to power disconnection or failure of a node, partial disconnection in a network, or the like) and participation of a node is high, so that it is difficult to grasp the situations of nodes as a whole. Consequently, it is difficult to efficiently collect logs and perform the charging process unless a server performing centralized control like the above-described charging server is provided.

Also in a contents distribution system provided with a server performing centralized control like the charging server, hitherto, it is difficult to calculate a consideration (for example, copyright royalty) to be paid to the owner of copyright of contents data. Since the consideration is calculated on rough estimation, it is further difficult to calculate the consideration in a peer-to-peer contents distribution system.

The present invention has been achieved in consideration of the problems, and an object of the invention is to provide a charging information generating apparatus, a charging information generating process program, a consideration information generating apparatus, a consideration information generating process program, and the like capable of generating reliable and certain charging information or consideration information more efficiently.

### Means for Solving the Problems

To solve the problems, according to one aspect of the invention, there is provided a charging information generating apparatus in an information distribution system having a plurality of nodes connected to each other via a network, in which a plurality of pieces of distribution information are dispersed and stored in the plurality of nodes, a plurality of pieces of location (whereabouts) information indicative of the locations of the distribution information pieces and each existing for each of the distribution information are dispersed and stored in the plurality of nodes, and in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes. The apparatus includes: a log obtaining means for obtaining the log recorded in at least two nodes out of the first, second, and third nodes; a log consistency determining means for determining consistency of the at least two logs obtained; and a charging information generating means, when it is determined that the logs have consistency, for generating charging information to the user of the first node.

Therefore, in the case where whether the logs recorded in at least the two nodes out of the first, second, and third nodes have consistency or not is determined and it is determined that the logs have consistency, information of a charge to the user of the first node is generated. Consequently, also in an information distribution system in which a plurality of pieces of distribution information are dispersed and stored in a plurality of nodes, reliable and certain charging information can be used more efficiently.

The log consistency determining means determines consistency between a log recorded in the first node and a log recorded in the second node, and determines consistency between the log recorded in the first node and a log recorded in the third node, and when it is determined in each of the determinations that there is consistency between the logs, the charging information generating means generates information of a charge to the user of the first node.

Therefore, more reliable and certain charging information can be generated more efficiently and used.

The charging information includes information of a fee to be charged to the user of the first node.

The charging information generating apparatus may be any one of the nodes.

To solve the problems, according to another aspect of the invention, there is provided a consideration information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes. The apparatus includes: a log obtaining means for obtaining the log recorded in at least two nodes out of the first, second, and third nodes; a log consistency determining means for determining consistency between the at least two logs obtained; and a consideration information generating means, when it is determined that the logs have consistency, for generating consideration information for the provider of the distribution information.

Therefore, in the case where whether the logs recorded in at least the two nodes out of the first, second, and third nodes have consistency or not is determined and it is determined that the logs have consistency, information of consideration to the provider of the distribution information is generated. Consequently, also in an information distribution system in which a plurality of pieces of distribution information are dispersed and stored in a plurality of nodes, reliable and certain consideration information can be used more efficiently.

The log consistency determining means determines consistency between a log recorded in the first node and a log recorded in the second node, and determines consistency between the log recorded in the second node and a log recorded in the third node, and when it is determined in each of the determinations that there is consistency between the logs, the consideration information generating means generates information of consideration to the provider of the distribution information.

Therefore, more reliable and certain consideration information can be generated more efficiently and used.

The consideration information includes information of a fee to be paid to the provider of the distribution information.

To solve the problems, according to another aspect of the invention, there is provided a consideration information generating apparatus in an information distribution system having a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and in the case where the node that stores the location information transmits the location information in response to a request from another node to the another node, a log of transmission of the location information to the another node is recorded in the node that stores the location information. The apparatus includes: a log obtaining means for obtaining the plurality of logs recorded in the node that stores the location information; and a consideration information generating means for generating consideration information for the provider of the distribution information corresponding to the location information by totaling the plurality of logs obtained.

Consequently, copyright royalty (consideration fee) to be paid to copyright which has been conventionally paid on rough estimation can be calculated more accurately and easily.

The consideration information generating apparatus may be any one of the nodes.

To solve the problems, according to another aspect of the invention, there is provided a method of generating charging information in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes. The method includes: a step of obtaining the log recorded in at least two nodes out of the first, second, and third nodes; a step of determining consistency of the at least two logs obtained; and a step of, when it is determined that the logs have consistency, generating charging information to the user of the first node.

To solve the problems, according to another aspect of the invention, there is provided a method of generating consideration information in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes. The method includes: a step of obtaining the log recorded in at least two nodes out of the first, second, and third nodes; a step of determining consistency between the at least two logs obtained; and a step of, when it is determined that the logs have consistency, generating consideration information for the provider of the distribution information.

To solve the problems, according to another aspect of the invention, there is provided a method of generating consideration information in an information distribution system having a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and in the case where the node that stores the location information transmits the location information in response to a request from another node to the another node, a log of transmission of the location information to the another node is recorded in the node that stores the location information. the method includes: a step of obtaining the plurality of logs recorded in the node that stores the location information; and a step of generating consideration information for the provider of the distribution information corresponding to the location information by totaling the plurality of logs obtained.

To solve the problems, according to another aspect of the invention, there is provided a charging information generating process program for making a computer included in a charging information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes, function as: a log obtaining means for obtaining the log recorded in at least two nodes out of the first, second, and third nodes; a log consistency determining means for determining consistency of the at least two logs obtained; and a charging information generating means, when it is determined that the logs have consistency, for generating charging information to the user of the first node.

To solve the problems, according to another aspect of the invention, there is provided a consideration information generating process program for making a computer included in a consideration information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes, function as: a log obtaining means for obtaining the log recorded in at least two nodes out of the first, second, and third nodes; a log consistency determining means for determining consistency between the at least two logs obtained; and a consideration information generating means, when it is determined that the logs have consistency, for generating consideration information for the provider of the distribution information.

To solve the problems, according to another aspect of the invention, there is provided a consideration information generating process program for making a computer included in a consideration information generating apparatus in an information distribution system having a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and in the case where the node that stores the location information transmits the location information in response to a request from another node to the another node, a log of transmission of the location information to the another node is recorded in the node that stores the location information, function as: a log obtaining means for obtaining the plurality of logs recorded in the node that stores the location information; and a consideration information generating means for generating consideration information for the provider of the distribution information corresponding to the location information by totaling the plurality of logs obtained.

To solve the problems, according to another aspect of the invention, there is provided a recording medium in which the charging information generating process program is computer-readably recorded.

To solve the problems, according to another aspect of the invention, there is provided a recording medium in which the consideration information generating process program computer-readably recorded.

### Effects of the Invention

According to the invention, in the case where whether the logs recorded in at least the two nodes out of the first, second, and third nodes have consistency or not is determined and it is determined that the logs have consistency, information of a charge to the user of the first node is generated. Consequently, also in an information distribution system in which a plurality of pieces of distribution information are dispersed and stored in a plurality of nodes, reliable and certain charging information can be generated more efficiently and used.

According to another aspect of the present invention, in the case where whether the logs recorded in at least the two nodes out of the first, second, and third nodes have consistency or not is determined and it is determined that the logs have consistency, information of consideration to the provider of the distribution information is generated. Consequently, also in an information distribution system in which a plurality of pieces of distribution information are dispersed and stored in a plurality of nodes, reliable and certain consideration information can be generated more efficiently and used.

### Brief Description of the Drawings

FIG. 1 is a diagram showing an example of a connection mode of nodes in a contents distribution system according to an embodiment of the present invention.
FIG. 2 is a diagram showing an example of a schematic configuration of a node 1.
FIG. 3 is a flowchart showing location information/contents data requesting process in a controller 11 in the node 1 requesting location information and contents data.
FIG. 4A is a flowchart showing location information retrieving process in the controller 11 for retrieving location information, and FIG. 4B is a flowchart showing contents data distributing process in the controller 11 in the node 1 for distributing contents data.
FIG. 5 is a diagram showing an example of the details of logs recorded in a log file in a node 1.
FIG. 6 is a conceptual diagram showing the relations among a requesting node, a route node, and a distribution source node.
FIG. 7 is a flowchart showing charging information generating process in the controller 11 in the node 1.
FIG. 8 is a flowchart showing consideration information generating process in the controller 11 in the node 11.

### Description of Reference Numerals

- 1: node
- 11: controller
- 12: storage
- 13: buffer memory
- 14: decoder
- 15: video processor
- 16: display
- 17: sound processor
- 18: speaker
- 19: encoder
- 20: communication unit
- 21: input unit
- 22: bus
- S: contents distribution system

### Best Mode for carrying out the Invention

Preferred embodiments of the present invention will be described hereinbelow with reference to the drawings. In the following embodiments, the present invention is applied to a contents distribution system for distributing contents data as distribution information.

### [1. Configuration and the like of Contents Distribution System]

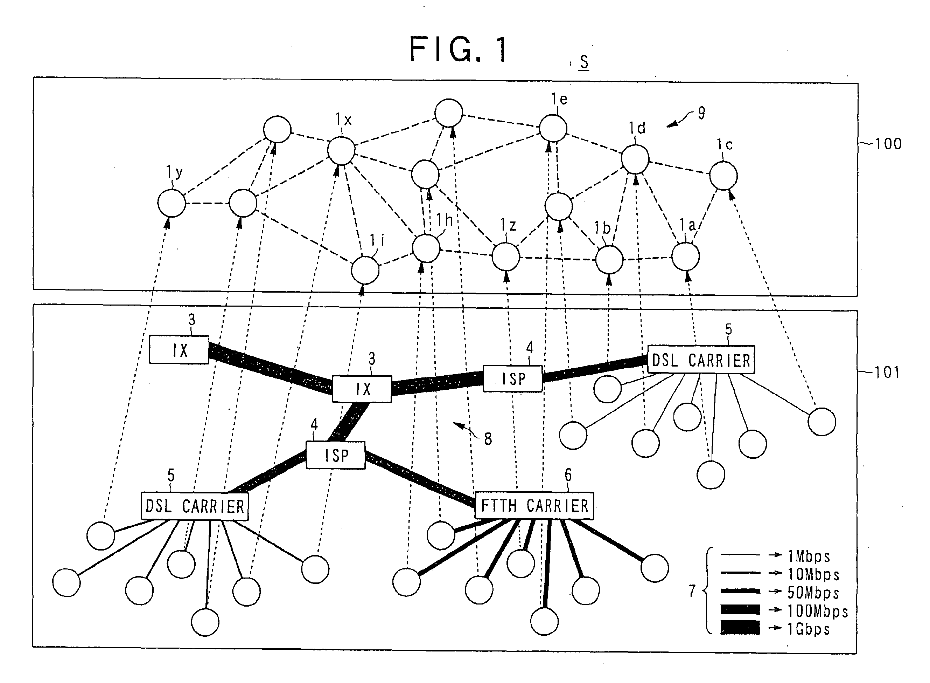

First, referring to FIG. 1, a schematic configuration and the like of a contents distribution system as an information distribution system will be described.

FIG. 1 is a diagram showing an example of connection modes of nodes in a contents distribution system according to the embodiment.

As shown in a lower frame 101 in FIG. 1, a network (network in the real world) 8 such as the Internet is constructed by an IX (Internet exchange) 3, an ISP (Internet Service Provider) 4, (an apparatus of) a DSL (Digital Subscriber Line) carrier 5, (an apparatus of) an FTTH (Fiber To The Home) carrier 6, a communication line (such as telephone line or optical cable) 7, and the like.

The contents distribution system S is a peer-to-peer network system constructed by including a plurality of nodes 1a, 1b, 1c, ... connected to each other via such a network 8. To each of the nodes 1a, 1b, 1c, ..., unique manufacturer's serial number and IP (Internet Protocol) address are assigned. The same serial number and the same IP address are not assigned to a plurality of nodes 1. In the following description, in the case of referring to any of the nodes 1a, 1b, 1c, ..., it may be called a node 1 for convenience.

In the contents distribution system S, an overlay network 9 as shown in an upper frame 100 in FIG. 1 is constructed by a specific algorithm, for example, an algorithm using a distribute hash table (hereinbelow, DHT) which will be described later. That is, the overlay network 9 denotes a network constructing a virtual link formed by using the existing network 8.

In the embodiment, the overlay network 9 constructed by the algorithm using the DHT is a precondition. The node 1 disposed on the overlay network 9 is called a node 1 which participates in the contents distribution system S (in other words, which participates in the overlay network 9). To participate in the contents distribution system S, an unparticipating node transmits a participation request to an arbitrary node 1 which is participating in the system.

The node ID of each node 1 participating in the contents distribution system S is a value obtained by hashing the IP address or serial number with a common hash function. The node IDs are uniformly dispersed in an ID space. A probability that the (hashed) node IDs obtained with a common hash function become the same value when the IP addresses or serial numbers are different, is extremely low. Since the hash function is known, it will not be described in detail. In the embodiment, a value obtained by hashing an IP address (global IP address) with a common hash function is used as a node ID.

Each of the nodes 1 participating in the contents distribution system S has a DHT. In the DHT, information of a path to another node, specifically, a plurality of node IDs and a plurality of IP addresses of other nodes properly apart in the node ID space is registered. Such a DHT is given when the node 1 participates in the contents distribution system S. In the contents distribution system S, nodes 1 participate/withdraw frequently, so that whether updating of the DHT is necessary or not is determined periodically (for example, every tens minutes to every few hours), and the update information is transmitted to another node 1 via a path registered in the DHT. In such a manner, the DHT can be maintained in the latest state. A method of generating the DHT is known, so that it will not be described in detail.

Further, in a plurality of nodes 1 participating in the contents distribution system S, data of contents (such as movies and music) to be distributed from one node 1 to another node 1 are dispersedly stored. For example, contents data of a movie whose title is XXX is stored in the node 1a. On the other hand, contents data of a movie whose title is YYY is stored in the node 1b. In such a manner, different contents data is dispersed and stored in a plurality of nodes 1. Certain contents data is not always stored in one node 1 but can be stored in a plurality of nodes. To the contents data stored in the plurality of nodes 1, unique contents names are assigned.

Location information indicative of locations (whereabouts) of contents data dispersedly stored (for example, the IP addresses and serial numbers of the nodes 1 in which contents data is stored) is also dispersedly stored in the plurality of nodes 1 participating in the contents distribution system S. For example, the contents name of certain contents data is hashed with a hash function which is common as that at the time of obtaining the node ID (that is, it is located in the same ID space as that of the hash value of the IP address of the node 1). The location information of the contents data is stored in the node 1 (hereinbelow, called "route node 1x") having the node ID closest to the hash value (contents ID) (for example, having the largest number of matched high order digits). That is, even in the case where the same contents data (having the same contents ID) is stored in a plurality of nodes 1, the location information (such as IP addresses of the plurality of nodes 1) can be managed in the single route node 1x. Although the location information of contents data corresponding to one contents ID is stored in one route node (that is, the route node and the location information have a one-to-one correspondence) in the embodiment, the invention is not limited to the arrangement.

With the arrangement, the node (first node) 1a that wishes to obtain (download) certain contents data transmits the contents ID of the contents data to another node 1. The contents ID is transferred via some nodes 1 and reaches the route node (second node) 1x storing the location information indicative of the location of the contents data (that is, the node 1 having the node ID closest to the contents ID) . Consequently, the location information can be obtained (received) from the route node (second node) 1x. On the basis of the obtained location information, the node 1a can be connected to, for example, the node (third node) 1b storing the contents data, and can obtain (receive) the contents data from the node 1b.

Until the contents ID reaches the route node 1x, the location information may be obtained (received) from the node 1 that caches the same location information as that in the route node 1x.

In the case where the node 1a obtains location information from the route node 1x and the operation of obtaining contents data from the node 1b on the basis of the location information is performed, the contents data or a log (use history information) of transmission/reception of the location information corresponding to the contents data is recorded at least two of the node 1a, the node 1 obtaining the location information (for example, the route node 1x), and the node 1b. The log recorded in such a manner is collected by any of the nodes 1. In the node 1, information of charging for the user of the node 1a that obtains the contents data is generated, or consideration information for the provider of the contents (such as the owner of copyright, the owner of neighboring right, or manufacturer) is generated. The details of the operation will be described later.

### [2. Configuration and the like of Node]

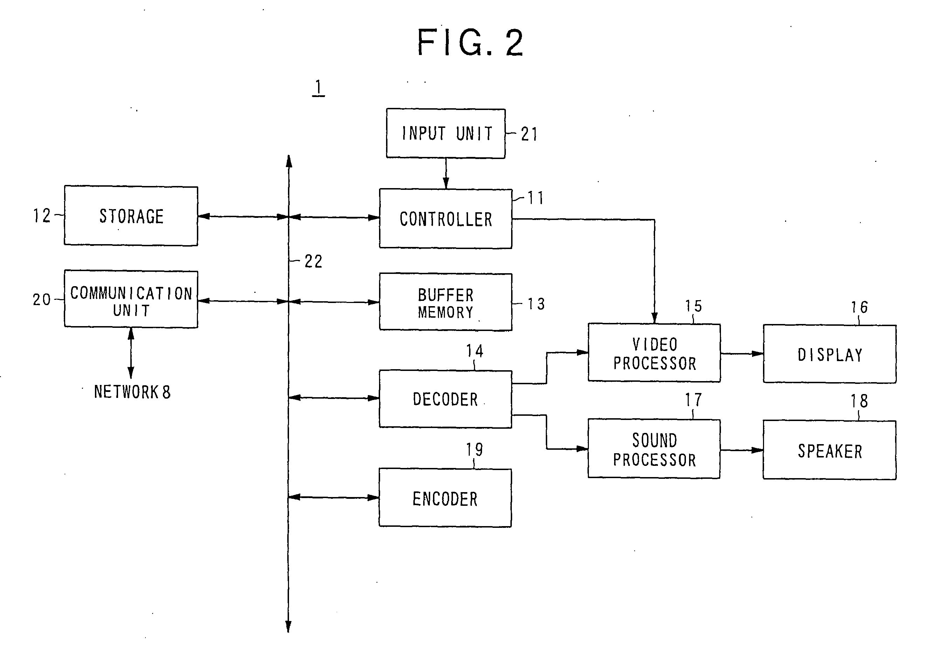

Referring now to FIG. 2, the configuration and function of the node 1 will be described.

FIG. 2 is a diagram showing an example of a schematic configuration of the node 1.

As shown in FIG. 2, each of the nodes 1 has: a controller 11 as a computer constructed by a CPU having a computing function, a RAM for work, a ROM for storing various data and a program, and the like; a storage 12 constructed by an HDD or the like for storing the contents data, the location information, a DHT, a program, and the like (there is a node 1 in which the contents data and the location information is not stored) ; a buffer memory 13 for temporarily storing received contents data; a decoder 14 for decoding (data-decompressing, deciphering, or the like) encoded video data, audio data, and the like included in the contents data; a video processor 15 for performing a predetermined drawing process on the decoded video data or the like and outputting the resultant signal as a video signal; a display 16 such as a CRT, a liquid crystal display, or the like for displaying a video image on the basis of a video signal output from the video processor 15; a sound processor 17 for D/A (Digital/Analog) converting the decoded audio data to an analog audio signal, amplifying the analog audio signal, and outputting the amplified audio signal; a speaker 18 for outputting the audio signal output from the sound processor 17 as an acoustic wave; an encoder 19 for encoding (data-compressing, ciphering, or the like) the video data, audio data, and the like included in the contents data; a communication unit 20 for performing communication control on information transmitted/received to/from another node 1 via the network 8; and an input unit (for example, a keyboard, a mouse, an operation panel, or the like) for receiving an instruction from the user and giving an instruction signal according to the instruction to the controller 11. The controller 11, storage 12, buffer memory 13, decoder 14, encoder 19, and communication unit 20 are connected to each other via a bus 22.

When the CPU in the controller 11 executes various programs stored in the storage 12 or the like, the controller 11 controls the node 1 in a centralized manner. According to an instruction signal from the input unit 21, the controller 11 executes any one or plural processes of a location information/contents data requesting process, a location information retrieving process, a contents data distributing process, a charging information generating process, and a consideration information generating process. The processes will be described later.

### [3. Operation of Contents Distribution System]

The operation of the contents distribution system S will now be described.

### (Location information/contents data requesting process, location information retrieving process, and contents data distributing process)

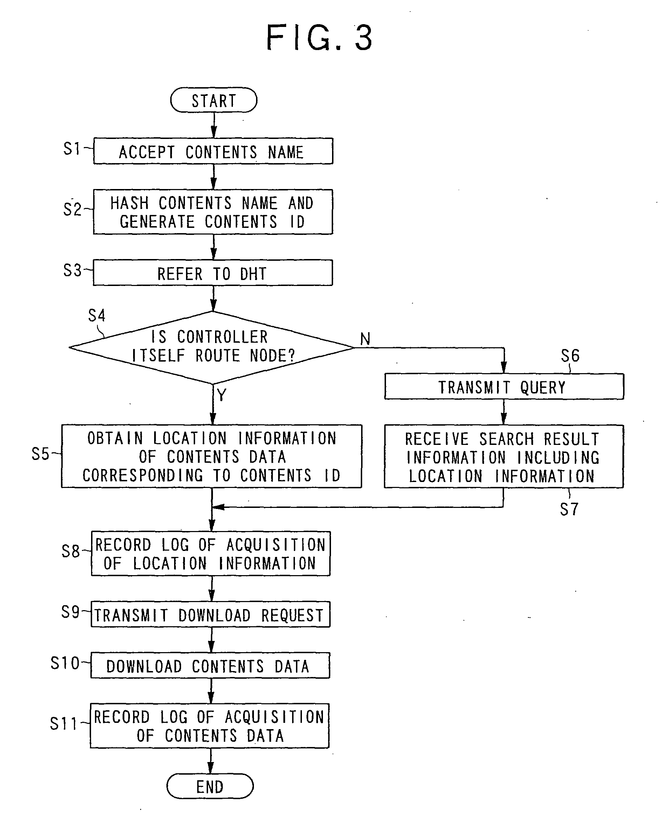

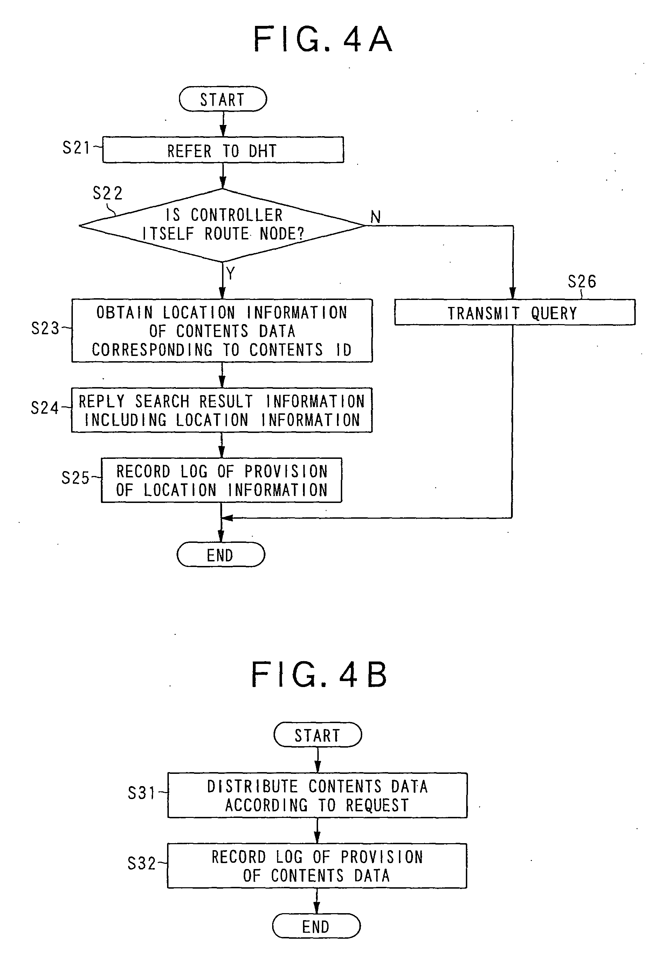

First, with reference to FIGS. 3 and 4 and the like, the location information/contents data requesting process, the location information retrieving process, and the contents data distributing process will be described.

FIG. 3 is a flowchart showing a location information/contents data requesting process in the controller 11 in the node 1 requesting for location information and contents data. FIG. 4A is a flowchart showing the location information retrieving process in the controller 11 for retrieving location information. FIG. 4B is a flowchart showing the contents data distributing process in the controller 11 in the node 1 distributing contents data.

The location information/contents data requesting process shown in FIG. 3 is performed by executing the location information/contents data requesting process program stored in the storage 12 or the like by the controller 11. The location information retrieving process shown in FIG. 4A is performed by executing the location information retrieving process program stored in the storage 12 or the like by the controller 11. The contents data distributing process shown in FIG. 4B is performed by executing the contents data distributing process program stored in the storage 12 or the like by the controller 11.

First, when the user of the node 1a (hereinbelow, called a requesting node as appropriate) operates the input unit 21 to enter a contents data request start instruction, for example, a contents list (not shown) is displayed on the display 16. In the contents list, for example, the names (for example, the title of a movie) of part or all of contents data stored in the plurality of nodes 1 are written. The contents list is obtained from another node 1 (for example, a node registered in the DHT) at the time of participating in the contents distribution system S or periodically.

In the state where such a contents list is displayed, when the user operates the input unit 21 to select the name of contents data which is, for example, desired (or to be requested), the controller 11 accepts the selection of the contents name (step S1) and hashes the accepted contents name with the common hash function (a hash function obtained by hashing the IP address), thereby generating a contents ID (step S2).

Subsequently, the controller 11 refers to the DHT stored in the storage 12 (step S3) and determines whether the controller 11 itself is the route node 1x of the contents data or not (step S4). For example, whether the node ID of the controller 11 itself is closest to the contents ID (for example, a larger number of high order digits match) or not is determined. In the case where the node ID is the closest to the contents ID, that is, in the case where the controller 11 determines that the controller 11 itself is the route node of the contents data (Y in step S4), the controller 11 obtains the location information (IP address and serial number) of contents data corresponding to the contents ID from the storage 12 of itself (step S5), moves to step S8, and records the log.

On the other hand, when it is determined that the controller 11 is not the route node 1x of the contents data, the controller 11 issues a query to which the IP address and contents ID of itself are added, and transmits the query to another node 1 via the communication unit 20 and the like (step S6) . For example, the query is transmitted to a node 1 having a node ID closest to the contents ID (for example, a large number of high order digits match) among node IDs registered in the DHT.

Next, in the node 1 which received the query, the location information retrieving process shown in FIG. 4A is performed. The controller 11 refers to the DHT stored in the storage 12 (step S21) and, on the basis of the contents ID added to the query, determines whether the controller 11 itself is the route node 1x of the contents data or not (step S22). For example, the controller 11 determines whether or not the node ID of itself is the closest to the contents ID (for example, a larger number of high order digits match). If YES, that is, in the case where it is determined that the controller 11 is the route node 1x of the contents data (Y in step S22), the controller 11 obtains the location information of the contents data corresponding to the contents ID (added to the query) from the storage 12 (step S23) and transmits (replies), as search result information, the location information and the serial number, IP address, node ID, and the like of itself (route node 1x) to the node 1a which has sent the query via the communication unit 20 or the like (step S24). The controller 11 records, as a log (log related to provision of location information), the date and time at that time (time stamp), the contents ID and the serial number (or IP address) of the node 1a added to the query and, further, serial number or the like of the node 1b that stores the contents data included in the location information of the contents data sent back to the node 1a into a log file in the storage 12 (step S25) .

On the other hand, in the case where it is determined in the step S22 that the controller 11 is not the route node 1x of the contents data (N in step S22), the query is transmitted (transferred) to further another node 1 (step S26). In this case as well, for example, the query is transmitted (transferred) to the node 1 having the node ID closest to the contents ID (for example, a larger number of high order digits match) among node IDs registered in the DHT. Until the route node 1x in which the location information of the contents data corresponding to the contents ID is found, the query is transmitted (transferred) to the another node 1. In the node 1 which received the query, the processes shown in FIG. 4A are performed.

Next, in the processes in FIG. 3, when the node 1a receives (obtains) the search result information (including the location information of the contents data, serial number of the route node 1x, node ID, IP address, and the like) transmitted (replied) from the route node 1x (step S7), the controller 11 in the node 1a records, as a log (log related to acquisition of location information), the date and time at that time (time stamp), the contents ID of itself (node 1a), the serial number of the route node 1x, the serial number of the node 1b that stores the contents data included in the location information of the contents data, and the like into a log file in the storage 12 (step S8).

Subsequently, on the basis of the location information of the contents data included in the search result information (that is, according to the IP address), the controller 11 in the node 1a is connected to, for example, the node 1b storing the contents data, and transmits a download request to which the contents ID of the contents data, the serial number of the controller 11, the serial number of the route node 1x, and the like are added via the communication unit 20 or the like (step S9).

In the case where the same location information as that of the route node 1x is cached until the contents ID reaches the route node 1x, the location information is obtained (received) from the node 1. In the case where it is determined in the step S4 that the controller 11 itself is not the route node 1x of the contents data (N in step S4), whether the location information is cached or not is determined. If YES, the controller 11 shifts to the step S5. If NO, the controller 11 may shift to the step S6. In the case where there are a plurality of nodes 1 storing the contents data corresponding to the contents ID, the location information (such as IP addresses) of the plurality of nodes 1 is included in the obtained search result information. In this case, the plurality of pieces of location information are selectably displayed on the display 16. When the user operates the input unit 21 to select desired one of the plurality of pieces of location information, a download request is transmitted to the node 1 storing the contents data on the basis of the selected location information.

Next, in the node 1b that receives the download request (hereinbelow, called a distribution source node as appropriate), the contents data distributing process shown in FIG. 4B starts, and the controller 11 reads the contents data stored in the storage 12, for example, encodes the read contents data, and transmits (distributes) the resultant data to the node 1a that has sent the download request via the communication unit 20 or the like (step S31). Subsequently, the controller 11 of the node 1b records, as a log (log related to provision of contents data), the date and time at that time (time stamp), the contents ID of the contents data, the serial number of the node 1a that has sent the download request, and the serial number of the route node 1x into a log file in the storage 12 (step S32).

In the processes of FIG. 3, when the node 1a receives (obtains) the contents data transmitted (distributed) from the node 1b, that is, when the contents data is downloaded (step S10), the controller 11 of the node 1a records, as a log (log related to acquisition of contents data), the date and time at that time (time stamp), the contents ID of the contents data, the serial number of itself (the node 1a), the serial number of the route node 1x, and the serial number of the node 1b which has distributed the contents data included in the location information of the contents data into a log file in the storage 12 (step S11) . The contents data downloaded in such a manner is stored in the storage 12. In the case where the contents data is reproduced, the contents data is temporarily stored in the buffer memory 13, for example, decoded by the decoder 14, and reproduced and output via the video processor 15, sound processor 17, and speaker 18.

As described above, in the node 1a performing the location information/contents data requesting process, the route node 1x performing the location information retrieving process, and the node 1b performing the contents data distributing process, a log is recorded in a log file each time each of the processes in FIGS. 3 and 4 is performed.

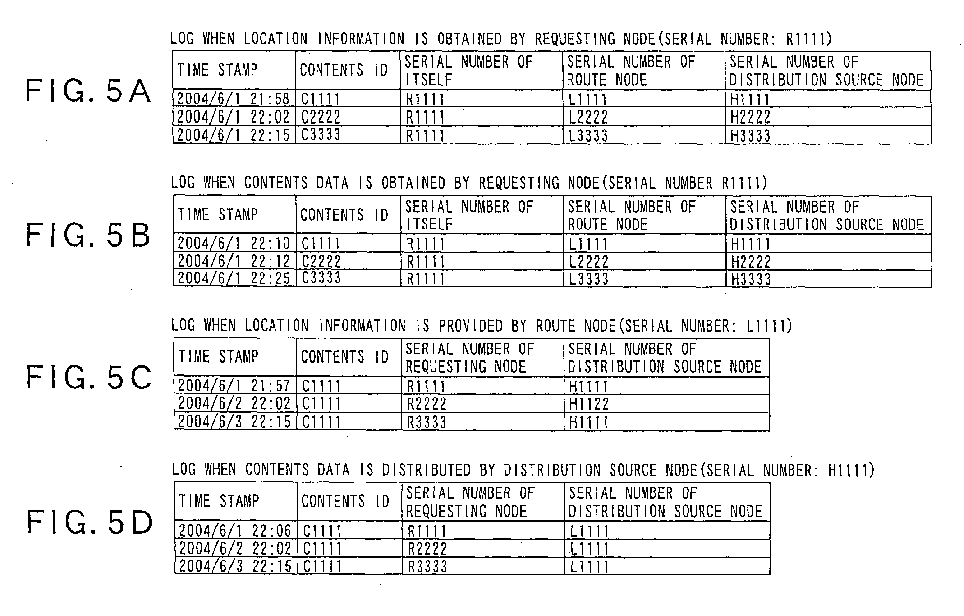

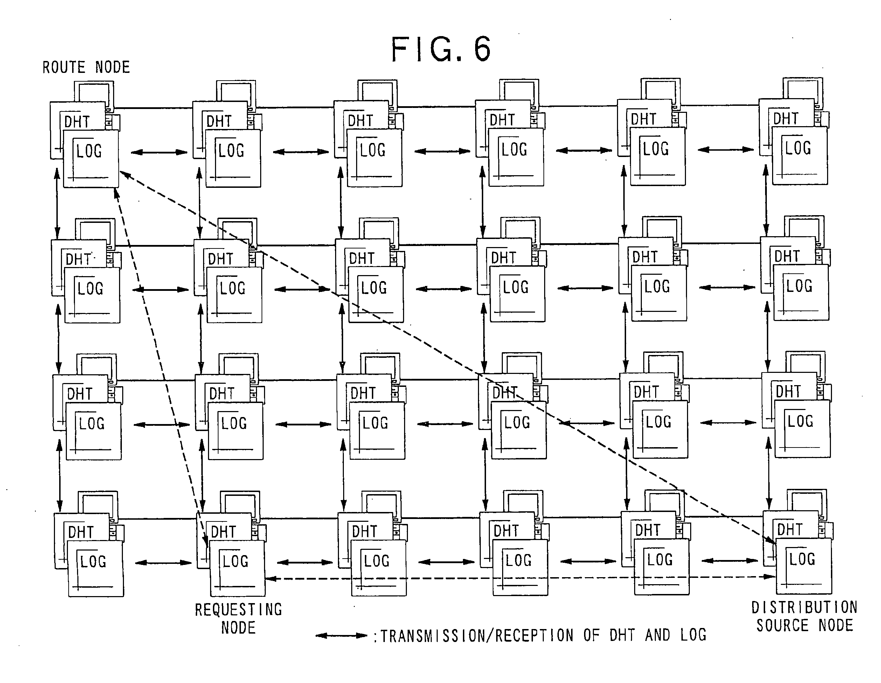

FIGS. 5A to 5D are diagram each showing an example of the details of logs recorded in the log file in each of the nodes 1. FIG. 6 is a conceptual diagram showing the relations among the requesting node, the route node, and the distribution source node.

FIG. 5A shows an example of the details of logs when the requesting node for performing the location information/contents data requesting process obtains location information. FIG. 5B shows an example of the details of logs when contents data is obtained (downloaded) in the requesting node. FIG. 5C shows an example of the details of logs when the location information is provided in the route node for performing the location information searching process. FIG. 5D shows an example of the details of logs when the contents data is distributed in the distribution source node for performing the contents data distributing process. In each of FIGS. 5A to 5D, three logs are shown. One log is controlled by one time stamp. The logs recorded as described above are obtained (collected) in the charging information generating process and the consideration information generating process which will be described above.

### (Charging Information Generating Process)

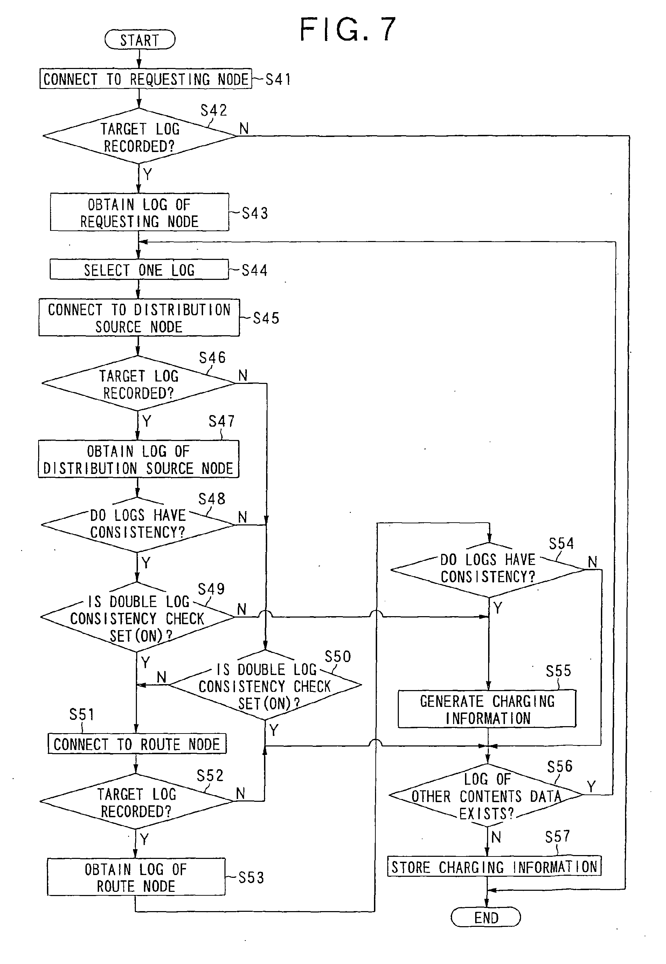

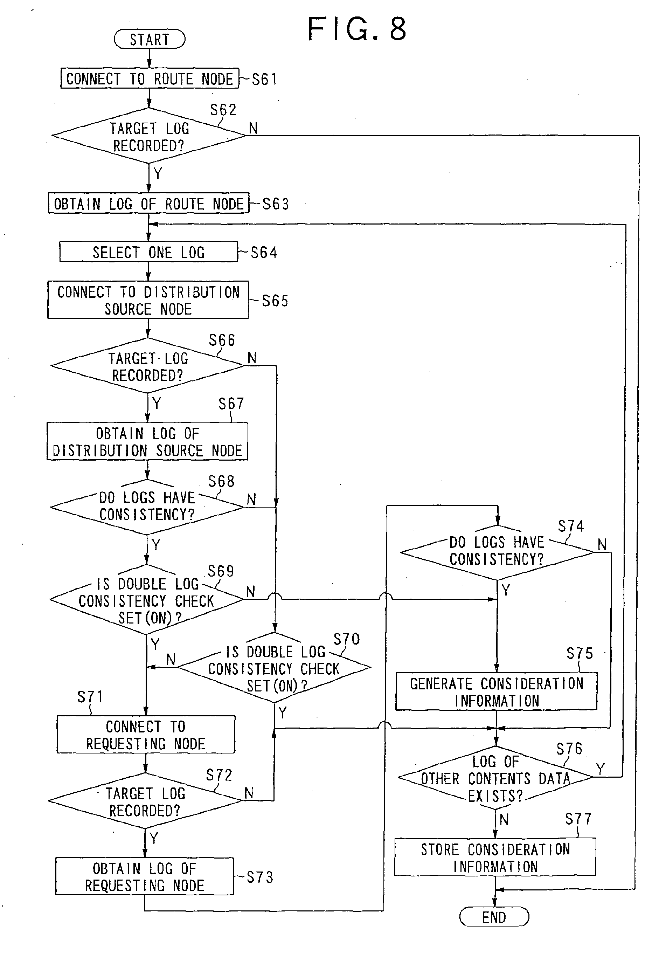

Next, the charging information generating process for generating charging information including information of a charge to the user of the node 1 that receives contents data will be described with reference to FIGS. 7 and 8 and the like.

FIGS. 7 and 8 are flowcharts showing the charging information generating process in the controller 11 in the node 1. The charging information generating process shown in FIGS. 7 and 8 is performed when the charging information generating process program stored in the storage 12 or the like is executed by the controller 11. Consequently, the controller 11 functions as a log obtaining means, a log consistency determining means, and a charging information generating means of the present invention. The charging information generating process program may be, for example, downloaded from a predetermined server on the network 8 or recorded on a recording medium such as a CD-ROM and read via the drive of the recording medium.

The charging information generating process shown in FIGS. 7 and 8 can be executed by all of the nodes 1 participating in the contents distribution system S. In reality, for example, the charging information generating process is executed periodically (for example, when the DHT is updated) in a plurality of representative nodes 1 to which predetermined authority is given. The user of each node 1 can arbitrary make a setting of whether the charging information generating process is performed or not. Each of the nodes 1 can execute the charging information generating process in accordance with the setting.

For example, when the charging information generating process shown in FIG. 7 starts in the node 1c, the controller 11 of the node 1c refers to the DHT, obtains the IP address corresponding to the node ID of the node 1a (requesting node) registered in the DHT, and is connected to the node 1a via the communication unit 20 or the like in accordance with the IP address (step S41).

Subsequently, the controller 11 determines whether a log from which charging information is to be generated is recorded or not by sending a query to, for example, the node 1a (step S42). Such a query includes a query of, for example, whether a log is recorded after certain time (seconds, minutes, hours, date, and month) or not. It means that charging information of logs before the certain time, which has been already generated, is eliminated.

In the case where a log from which charging information is to be generated is recorded (Y in step S42), the controller 11 serving as the log obtaining means obtains (collects) a log recorded on the node 1a (hereinbelow, called "log of the requesting node"), for example, in the form of a log file from the node 1a (step S43). For example, a log of the requesting node when contents data is obtained (downloaded) as shown in FIG. 5B and a log of the requesting node when location data as shown in FIG. 5A is obtained are acquired. On the other hand, in the case where a log of the requesting node from which charging information is to be generated is not recorded (N in step S42), the process is finished.

Next, the controller 11 selects one of the obtained logs of the requesting node (step S44). For example, in the case where there are a plurality of logs of the requesting node, for example, the oldest log or the latest log is selected.

The controller 11 refers to the selected log of the requesting node, obtains the IP address corresponding to the serial number of the node 1b (distribution source node) that has distributed to the contents data included in the log (for example, inquiring the node 1 that controls the IP addresses), and is connected to the node 1b via the communication unit 20 or the like in accordance with the IP address (step S45).

Subsequently, the controller 11 determines whether a log from which charging information is to be generated is recorded or not by, for example, inquiring the node 1b (step S46) . Such a query includes a query of, for example, whether a log is recorded after certain time (seconds, minutes, hours, date, and month) or not like the query in the step S42.

In the case where a log from which charging information is to be generated is recorded (Y in step S46), the controller 11 serving as the log obtaining means obtains (collects) a log recorded on the node 1b (hereinbelow, called "log of the distribution source node"), for example, in the form of a log file from the node 1b (step S47). For example, logs of the distribution source node when contents data is distributed as shown in FIG. 5D are obtained. On the other hand, in the case where a log of the distribution source node from which charging information is to be generated is not recorded (N in step S46), the controller 11 shifts to step 550.

Next, the controller 11 compares the log of the requesting node selected in the step S44 (in this case, the log of the requesting node when the contents data is obtained (downloaded) as shown in FIG. 5B) with the log of the distribution source node obtained in the step S47 (the log of the distribution source node when the contents data is distributed as shown in FIG. 5D) and, as the log consistency determining means, determines consistency of the two logs (step S48). Such consistency is determined by, for example, whether the time stamps, contents IDs, and the serial numbers of the node 1a (requesting node) included in the two logs match each other or not. In the case where there are a plurality of logs of the distribution source node, it is determined that the logs have consistency when the time stamp, the contents ID, and the serial number of the node 1a of one of the logs and those of the log in the requesting node match each other. Since the time stamp in the node 1a (requesting node) and that in the node 1b (distribution source node) do not always coincide with each other due to time lag, error, and the like, it is regarded that the time stamps coincide with each other when the two time stamps lie in a predetermined range in which the lag, error, and the like are considered.

When it is determined that there is consistency (Y in step S48), whether a double log consistency check is set (ON) or not is determined (step S49) (that is, in the step S49, whether consistency among a log of the requesting node, a log in the distribution source node, and a log of the route node is necessary or not is determined.) The double log consistency check setting is a setting of determining consistency between a log of the requesting node and a log recorded in the route node 1 (hereinbelow, called "log of the route node") in addition to the consistency between the log of the requesting node and a log in the distribution source node. By the setting, more reliable and certain charging information can be generated. The setting can be made by a remote control by a charging company.

When the dual log consistency check setting is not made (N in step S49) (that is, when it is sufficient that the logs recorded in at least two of the log in the requesting node, the log in the distribution source node, and the log in the route node have consistency), the controller 11 goes to step S55. In other words, without determination of consistency between the log in the requesting node and the log in the route node, charging information is generated. On the other hand, when the double log consistency check setting is made (ON) (Y in step S49), the controller 11 goes to step S51.

On the other hand, when it is determined in the step S48 that there is no consistency between the log in the requesting node and the log in the distribution source node (the logs do not coincide with each other) (N in step S48), whether the double log consistency check setting is made (ON) or not is determined (step S50) (that is, in the step S50, whether consistency among three logs of the log in the requesting node, the log in the distribution source node, and the log in the route node is necessary or not is determined). In the case where the dual log consistency check setting is not made (N in step S50) (that is, when it is sufficient that logs recorded in at least two nodes out of the log in the requesting node, the log in the distribution source node, and the log in the route node have consistency), the controller 11 moves to step S51 (in other words, if only the log in the requesting node and the log in the route node have consistency, the charging information is generated) . On the other hand, when the dual log consistency check setting is made (ON) (Y in step S50), the controller 11 moves to step S56 (that is, the charging information for the log is not generated).

In the step S51, the controller 11 refers to the log in the requesting node selected in the step S44, obtains the IP address corresponding to the serial number of the route node 1x included in the log (for example, inquiring the node 1 that controls the IP addresses), and is connected to the route node 1x via the communication unit 20 or the like in accordance with the IP address.

Subsequently, the controller 11 determines whether a log in the route node from which charging information is to be generated is recorded or not by, for example, inquiring the route node 1x (step S52). Such a query includes a query of , for example, whether a log is recorded after certain time (seconds, minutes, hours, date, and month) or not like the query in the step S42.

In the case where a log in the route node from which charging information is to be generated is recorded (Y in step S52), the controller 11 serving as the log obtaining means obtains (collects) a log recorded on the route node 1x, for example, in the form of a log file from the route node 1x (step S53). For example, logs when location information is provided as shown in FIG. 5C are obtained. On the other hand, in the case where a log of the route node from which charging information is to be generated is not recorded (N in step S52), the controller 11 shifts to step S56 (that is, charging information of the log is not generated).

Subsequently, the controller 11 compares the log of the requesting node selected in the step S44 (the log of the requesting node when the location information is obtained as shown in FIG. 5A) with the log of the route node obtained in the step S53 (the log when the location information is provided as shown in FIG. 5C) and, as the log consistency determining means, determines consistency of the two logs (step S54). Such consistency is determined by, for example, whether the time stamps, contents IDs, and the serial numbers of the node 1a (requesting node) included in the two logs match each other or not. In the case where there are a plurality of logs in the route node, it is determined that the logs have consistency when the time stamp, the contents ID, and the serial number of the node 1a of one of the logs and those of the log in the requesting node match each other. Since the time stamp in the node 1a (requesting node) and that in the route node 1x do not always coincide with each other due to time lag, error, and the like, it is regarded that the time stamps coincide with each other when the two time stamps lie in a predetermined range in which the lag, error, and the like are considered.

When it is determined that there is consistency (Y in step S54), the controller 11 as the charging information generating means generates charging information including information of a charge (contents fee) to the user side of the node 1a (the requesting node) (the user of the node 1a, the owner of the node 1a, or the like) (step 555). For example, the node 1c stores a table of charges in which charges of contents data are set (for example, the charge varies according to contents data). Information indicative of the charges of the contents data corresponding to the contents IDs included in the log is obtained and included in the charging information.

Subsequently, the controller 11 determines whether or not there is a log of other contents data in addition to the log of the requesting node obtained in the step S43 (a log other than the log whose consistency has been determined in the above-described process) (step S56). If there is a log of the other contents data (Y in step S56), the controller 11 returns to the step S44, selects one log from the logs of the requesting node, and repeats processes similar to the above. When charging information of the log is generated in the step S55, the charge included in the charging information already generated and the charge of the contents data obtained this time are integrated, and information indicative of the integrated charge is included in the charging information.

On the other hand, when there is no log of the other contents data (N in step S56), the controller 11 stores the generated charging information, date and time of generation of the charging information, and the serial number or the node ID of the node 1a so as to be associated with each other in the storage 12 (step S57), and finishes the process. The charging information generated as described above is used by the user side of the node 1a to pay the charge of the contents data to the seller or the like of the contents data. For example, bill information including the charging information is transmitted from the node 1a to the node 1a or settlement request information including the charging information is transmitted from the node 1c to a server of a credit card settlement company or a server of a financial institute, and automatic settlement is made. For example, the charging information generated by the plurality of nodes 1 may be collected by a specific node 1. As a method of paying the charge included in the charging information by the user side of the node 1a, any known methods may be used.

As described above, in the charging information generating process, in the representative plural nodes 1, consistency of at least two logs, specifically, a log of the requesting node and a log of the distribution source node (or a log of the requesting node and a log of the route node) is determined and, when there is consistency, charging information including information of a charge to the user side of the contents data is generated. Therefore, also in the peer-to-peer contents distribution system S in which a plurality of pieces of contents data are dispersedly stored in a plurality of nodes 1, reliable and certain charging information for the user of the contents data can be efficiently generated and used.

Further, by generating the charging information in the case where a log in the requesting node and a log in the distribution source node have consistency and a log in the requesting node and a log in the route node have consistency, log redundancy is realized, so that more reliable and certain charging information can be generated more efficiently and used.

By determining consistency between a log in the requesting node and a log in the route node, whether or not the requesting node has obtained the location information of the contents data improperly (obtained not through the route node) can be determined.

Further, the plurality of representative nodes 1 perform the charging information generating process simultaneously with communications (such as reference and updating of the DHT, detection of the presence of the node 1 corresponding to a node ID written in the DHT, and the like) for maintaining the overlay network 9 as a component of the contents distribution system S. With such a configuration, without markedly increasing communication traffic, the logs can be collected.

Another configuration may be employed. In the charging information generating process, in the case where a log in the requesting node and a log in the distribution source node have consistency and a log in the requesting node and a log in the route node have consistency, the log in the distribution source node and the log in the route node are compared to determine whether they have consistency or not. If they have consistency, the charging information is generated. With the configuration, the reliability and certainty can be further improved.

As another example, in the charging information generating process, without determining consistency between a log in the requesting node and a log in the distribution source node and consistency between a log in the requesting node and a log in the route node have consistency, the log in the distribution source node and the log in the route node may be compared to determine whether they have consistency or not. If they have consistency, the charging information may be generated. With the configuration, even if the user of the node 1 obtains the contents data improperly (for example, by erasing the log), charging information can be generated.

### (Consideration Information Generating Process)

Referring now to FIG. 8 and the like, consideration information generating process for generating consideration information including information of a charge to be paid to the provider side (such as the owner of copyright, the owner of neighboring right, or manufacturer) of contents data will be described.

FIG. 8 is a flowchart showing the consideration information generating process in the controller 11 in the node 1. The consideration information generating process shown in FIG. 8 is performed when the consideration information generating process program stored in the storage 12 or the like is executed. The controller 11 functions as a log obtaining means, a log consistency determining means, and a consideration information generating means of the present invention. The consideration information generating process program may be, for example, downloaded from a predetermined server on the network 8 or recorded on a recording medium such as a CD-ROM and read via the drive of the recording medium.

The consideration information generating process shown in FIG. 8 can be executed by all of the nodes 1 participating in the contents distribution system S. In reality, for example, the consideration information generating process is executed periodically (for example, when the DHT is updated) in a plurality of representative nodes 1 to which predetermined authority is given. The user of each node 1 can arbitrary make a setting of whether the consideration information generating process is performed or not. Each of the nodes 1 can execute the consideration information generating process in accordance with the setting.

For example, when the consideration information generating process shown in FIG. 8 starts in the node 1c, the controller 11 of the node 1c refers to the DHT, obtains the IP address corresponding to the node ID of the route node 1x registered in the DHT (for example, by inquiring the node 1 controlling the IP addresses), and is connected to the route node 1x via the communication unit 20 or the like in accordance with the IP address (step S61).

Subsequently, the controller 11 determines whether a log from which consideration information is to be generated is recorded or not by sending a query to, for example, the node 1x (step S62) . Such a query includes a query of, for example, whether a log is recorded after certain time (seconds, minutes, hours, date, and month) or not.

In the case where a log from which consideration information is to be generated is recorded (Y in step S62), the controller 11 serving as the log obtaining means obtains (collects) a log recorded on the route node 1x, for example, in the form of a log file from the route node 1x (step S63). For example, a log when location data as shown in FIG. 5C is provided is obtained. On the other hand, in the case where a log of the requesting node from which consideration information is to be generated is not recorded (N in step S62), the process is finished.

Next, the controller 11 selects one of the obtained logs of the route node (step S64). For example, in the case where there are a plurality of logs of the route node, for example, the oldest log or the latest log is selected.

The controller 11 refers to the selected log of the route node, obtains the IP address corresponding to the serial number of the node 1b (distribution source node) that stores the contents data included in the log (contents data whose location information is controlled by the route node 1x) (for example, by inquiring the node 1 controlling the IP addresses), and is connected to the node 1b via the communication unit 20 or the like in accordance with the IP address (step S65).

Subsequently, the controller 11 determines whether a log from which consideration information is to be generated is recorded or not by, for example, inquiring the node 1b (step S66). Such a query includes a query of, for example, whether a log is recorded after certain time (seconds, minutes, hours, date, and month) or not like the query in the step S62.

In the case where a log from which consideration information is to be generated is recorded (Y in step S66), the controller 11 serving as the log obtaining means obtains (collects) a log of the distribution source node recorded on the node 1b, for example, in the form of a log file from the node 1b (step S67). For example, logs of the distribution source node when contents data is distributed as shown in FIG. 5D are obtained. On the other hand, in the case where a log of the distribution source node from which consideration information is to be generated is not recorded (N in step S66), the controller 11 shifts to step S70.

Next, the controller 11 compares the log of the route node selected in the step S64 (the log when the location information is provided, as shown in FIG. 5C) with the log of the distribution source node obtained in the step S67 (the log of the distribution source node when the contents data is distributed, as shown in FIG. 5D) and, as the log consistency determining means, determines consistency of the two logs (step S68). Such consistency is determined by, for example, whether the time stamps, contents IDs, and the serial numbers of the node 1a (requesting node) included in the two logs match each other or not. In the case where there are a plurality of logs of the distribution source node, it is determined that the logs have consistency when the time stamp, the contents ID, and the serial number of the node 1a of one of the logs and those of the log in the route node match each other. Since the time stamp in the route node 1x and that in the node 1b (distribution source node) do not always coincide with each other due to time lag (particularly, contents data provision time lags behind location information provision time), error, and the like, it is regarded that the time stamps coincide with each other when the two time stamps lie in a predetermined range in which the lag, error, and the like are considered.

When it is determined that there is consistency (Y in step S68), whether a double log consistency check is set (ON) or not is determined (step S69).

The double log consistency check setting is a setting of determining consistency between a log of the route node and a log of the requesting node in addition to the consistency between the log of the route node and a log in the distribution source node. By the setting, more reliable and certain consideration information can be generated. The setting can be made by operation on the input unit 21, of the user of the node 1c.

When the dual log consistency check setting is not made (N in step S69) (that is, when it is sufficient that the logs recorded in at least two of the log in the requesting node, the log in the distribution source node, and the log in the route node have consistency), the controller 11 goes to step S75. In other words, without determination of consistency between the log in the route node and the log in the requesting node, consideration information is generated. On the other hand, when the double log consistency check setting is made (ON) (Y in step S69), the controller 11 goes to step S71.

On the other hand, when it is determined in the step S68 that there is no consistency between the log in the route node and the log in the distribution source node (the logs do not coincide with each other) (N in step S68), whether the double log consistency check setting is made (ON) or not is determined (step S70) (that is, in the step S70, whether consistency among three logs of the log in the requesting node, the log in the distribution source node, and the log in the route node is necessary or not is determined). In the case where the dual log consistency check setting is not made (N in step S70) (that is, when it is sufficient that logs recorded in at least two nodes out of the log in the requesting node, the log in the distribution source node, and the log in the route node have consistency), the controller 11 moves to step S71 (inotherwords, if only the log in the route node and the log in the requesting node have consistency, consideration information is generated). On the other hand, when the dual log consistency check setting is made (ON) (Y in step S70), the controller 11 moves to step S76 (that is, consideration information for the log is not generated).

In the step S71, the controller 11 refers to the log of the route node selected in the step S64, obtains the IP address corresponding to the serial number of the node 1a (requesting node) included in the log (for example, inquiring the node 1 that controls the IP addresses), and is connected to the node 1a via the communication unit 20 or the like in accordance with the IP address.

Subsequently, the controller 11 determines whether a log in the requesting node from which consideration information is to be generated is recorded or not by, for example, inquiring the route node 1x (step S72). Such a query includes a query of, for example, whether a log is recorded after certain time (seconds, minutes, hours, date, and month) or not like the query in the step S62.

In the case where a log in the requesting node from which consideration information is to be generated is recorded (Y in step S72), the controller 11 serving as the log obtaining means obtains (collects) a log in the requesting node, for example, in the form of a log file from the node 1a (step S73). For example, logs in the requesting node when contents data is obtained (downloaded) as shown in FIG. 5B and logs in the requesting node when location information is obtained as shown in FIG. 5A are obtained. On the other hand, in the case where a log of the requesting node from which consideration information is to be generated is not recorded (N in step S72), the controller 11 shifts to step S76 (that is, consideration information of the log is not generated).

Subsequently, the controller 11 compares the log of the route node selected in the step S64 with the log of the requesting node obtained in the step S73 (the log of the requesting node when contents data is obtained (downloaded) as shown in FIG. 5B or the log of the requesting node when the location information is obtained as shown in FIG. 5A) and, as the log consistency determining means, determines consistency of the two logs (step S74). Such consistency is determined by, for example, whether the time stamps, contents IDs, and the serial numbers of the node 1a (requesting node) included in the two logs match each other or not like in the step S68. In the case where there are a plurality of logs in the requesting node, it is determined that the logs have consistency when the time stamp, the contents ID, and the serial number of the node 1a of one of the logs and those of the log in the route node match each other. Since the time stamp in the node 1a (requesting node) and that in the route node 1x do not always coincide with each other due to time lag, error, and the like, it is regarded that the time stamps coincide with each other when the two time stamps lie in a predetermined range in which the lag, error, and the like are considered.

When it is determined that there is consistency (Y in step S74), the controller 11 as the consideration information generating means generates consideration information including information of a charge to be paid to the provider side of the contents data whose location information is controlled in the route node 1x (for example, the owner of the contents data) (step S75). For example, the node 1c stores a table of charges in which consideration fees to be paid to the provider of the contents data are set. The information indicative of the charges of consideration of the contents data corresponding to the contents IDs included in the logs in the route node is obtained by the node 1c and included in the consideration information.

Subsequently, the controller 11 determines whether or not there is another log in the route node obtained in the step S63 (a log other than the logs whose consistency is determined in the above-described process) (step S76). If YES (Y in step S76), the controller returns to step S64, select one log from the logs in the route node, and repeats processes similar to the above. In the case where consideration information is generated for the log in the step S75, a consideration fee included in the consideration information already generated and a consideration fee of the contents data obtained this time are integrated. A consideration fee obtained by the integration is included in the consideration information. That is, the consideration fee according to the number of pieces of contents data used is paid to the provider side.

On the other hand, when there is no log (N in step S76), the controller 11 stores the generated consideration information, date and time of generation of the consideration information, and the contents ID so as to be associated with each other in the storage 12 (step S77), and finishes the process. The consideration information generated as described above is used to pay the consideration fee to the provider side of the contents data corresponding to the contents ID. For example, settlement request information including the consideration information is transmitted from the node 1c to a server of a financial institute or the like, and automatic settlement is made. For example, the consideration information generated by the plurality of nodes 1 may be collected by a specific node 1. As a method of paying a consideration fee to the provider of the contents data, any known methods may be employed.

As described above, in the consideration information generating process, in the representative plural nodes 1, consistency of at least two logs, specifically, a log of the route node and a log of the distribution source node (or a log of the route node and a log of the requesting node) is determined and, when there is consistency, consideration information including information of a charge (consideration fee) to be paid to the provider side of contents data (for example, the owner of copyright) is generated. Therefore, also in the peer-to-peer contents distribution system S in which a plurality of pieces of contents data are dispersedly stored in a plurality of nodes 1, reliable and certain consideration information for the provider of the contents data can be more efficiently generated and used.

Moreover, in the route node 1x, the providing state (in other words, the number of downloading times) of contents data stored in a plurality of nodes 1. (contents data whose location information is controlled by the route node 1x) is already totaled by logs in the route node, the copyright royalty (consideration fee) to be paid to the copyright which has been conventionally roughly paid can be calculated more accurately and efficiently.

Further, by generating the consideration information in the case where a log in the route node and a log in the distribution source node have consistency and a log in the route node and a log in the requesting node have consistency, log redundancy is realized, so that more reliable and certain consideration information can be generated more efficiently and used.

Further, the plurality of representative nodes 1 perform the consideration information generating process simultaneously with communications (such as reference and updating of the DHT, detection of the presence of the node 1 corresponding to a node ID written in the DHT, and the like) for maintaining the overlay network 9 as a component of the contents distribution system S. With such a configuration, without markedly increasing communication traffic, the logs can be collected.

Another configuration may be employed. In the consideration information generating process, in the case where a log in the route node and a log in the distribution source node have consistency and a log in the route node and a log in the request source node have consistency, the log in the requesting node and the log in the distribution source node are compared to determine whether they have consistency or not. If they have consistency, the consideration information is generated. With the configuration, the reliability and certainty can be further improved.

As another example of the consideration information generating process, the plural representative nodes 1 obtain only logs of a plurality of route nodes from the route node 1x for storing location information of contents data, total the obtained plural logs, and generate consideration information for the provider of the contents data corresponding to the location information (for example, the number of logs is multiplied with a preset consideration fee of contents data to calculate a total consideration fee, and the total consideration fee is included in the consideration information). With such a configuration, the copyright royalty (consideration fee) to be paid to the copyright which has been conventionally roughly paid can be calculated more accurately and easily.

In the embodiment, the overlay network 9 constructed by the algorithm using the DHT is a precondition. The present invention is not limited to the embodiment but can be also applied to an overlay network constructed by another algorithm capable of disposing information by which contents data can be identified (for example, contents name or contents number) in the same space as that of information by which a node can be identified (for example, serial number) without using a hash function.

The present invention is not limited to the foregoing embodiments. The embodiments are illustrative and anything having substantially the same configuration as that in the technical idea described in the scope of claims of the present invention and producing similar effects is included in the technical scope of the invention.

All of the disclosure of Japanese Patent Application No. 2004-285090 including the specification, scope of claims, drawings, and abstract filed on September 29, 2004 is incorporated herein by reference into this application.

## Claims

1. A charging information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and
in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes,
the apparatus comprising:
a log obtaining means for obtaining the log recorded in at least two nodes out of the first, second, and third nodes;
a log consistency determining means for determining consistency of the at least two logs obtained; and
a charging information generating means, when it is determined that the logs have consistency, for generating charging information to the user of the first node.

2. The charging information generating apparatus according to claim 1, wherein the log consistency determining means determines consistency between a log recorded in the first node and a log recorded in the second node, and determines consistency between the log recorded in the first node and a log recorded in the third node, and
when it is determined in each of the determinations that there is consistency between the logs, the charging information generating means generates information of a charge to the user of the first node.

3. The charging information generating apparatus according to claim 1 or 2, wherein the charging information includes information of a fee to be charged to the user of the first node.

4. The charging information generating apparatus according to claim 1 or 2, wherein the charging information generating apparatus is any one of the nodes.

5. A consideration information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and
in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes,
the apparatus comprising:
a log obtaining means for obtaining the log recorded in at least two nodes out of the first, second, and third nodes;
a log consistency determining means for determining consistency between the at least two logs obtained; and
a consideration information generating means, when it is determined that the logs have consistency, for generating consideration information for the provider of the distribution information.

6. The consideration information generating apparatus according to claim 5, wherein the log consistency determining means determines consistency between a log recorded in the first node and a log recorded in the second node, and determines consistency between the log recorded in the second node and a log recorded in the third node, and
when it is determined in each of the determinations that there is consistency between the logs, the consideration information generating means generates information of consideration to the provider of the distribution information.

7. The consideration information generating apparatus according to claim 5 or 6, wherein the consideration information includes information of a fee to be paid to the provider of the distribution information.

8. A consideration information generating apparatus in an information distribution system having a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and
in the case where the node that stores the location information transmits the location information in response to a request from another node to the another node, a log of transmission of the location information to the another node is recorded in the node that stores the location information, the apparatus comprising:
a log obtaining means for obtaining the plurality of logs recorded in the node that stores the location information; and
a consideration information generating means for generating consideration information for the provider of the distribution information corresponding to the location information by totaling the plurality of logs obtained.

9. The consideration information generating apparatus according to claim 5 or 6, wherein the consideration information generating apparatus is any one of the nodes.

10. A method of generating charging information in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and
in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes,
the method comprising:
a step of obtaining the log recorded in at least two nodes out of the first, second, and third nodes;
a step of determining consistency of the at least two logs obtained; and
a step of, when it is determined that the logs have consistency, generating charging information to the user of the first node.

11. A method of generating consideration information in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and
in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes,
the method comprising:
a step of obtaining the log recorded in at least two nodes out of the first, second, and third nodes;
a step of determining consistency between the at least two logs obtained; and
a step of, when it is determined that the logs have consistency, generating consideration information for the provider of the distribution information.

12. A method of generating consideration information in an information distribution systemhaving a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and
in the case where the node that stores the location information transmits the location information in response to a request from another node to the another node, a log of transmission of the location information to the another node is recorded in the node that stores the location information, the method comprising:
a step of obtaining the plurality of logs recorded in the node that stores the location information; and
a step of generating consideration information for the provider of the distribution information corresponding to the location information by totaling the plurality of logs obtained.

13. A charging information generating process program for making a computer included in a charging information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information are dispersed and stored in the plurality of nodes, and
in the case where a first node receives the location information indicative of the location of one piece of the distribution information from a second node and receives the one piece of the distribution information from a third node on the basis of the location information, a log of transmission/reception of the one piece of the distribution information or the location information corresponding to the one piece of the distribution information is recorded in at least two nodes out of the first, second, and third nodes, function as:
a log obtaining means for obtaining the log recorded in at least two nodes out of the first, second, and third nodes;
a log consistency determining means for determining consistency of the at least two logs obtained; and
a charging information generating means, when it is determined that the logs have consistency, for generating charging information to the user of the first node.

14. A consideration information generating process program for making a computer included in a consideration information generating apparatus in an information distribution system having a plurality of nodes connected to each other via a network, in which a plurality of pieces of distribution information are dispersed and stored in the plurality of nodes, a plurality of pieces of location information indicative of the locations of the distribution information pieces and each existing for each of the distribution information pieces are dispersed and stored in the plurality of nodes, and
in the case where a first node receives the location information indicative of the location of one of the plurality of pieces of distribution information from a second node, and receives the one piece of the distribution information from a third node on the basis of the location information, a log of transmission/reception of the one piece of the distribution information or the location information corresponding to the one piece of the distribution information is recorded in at least two nodes out of the first, second, and third nodes, function as:
a log obtaining means for obtaining the log recorded in at least two nodes out of the first, second, and third nodes;
a log consistency determining means for determining consistency between the at least two logs obtained; and
a consideration information generating means, when it is determined that the logs have consistency, for generating consideration information for the provider of the distribution information.

15. A consideration information generating process program for making a computer included in a consideration information generating apparatus in an information distribution system having a plurality of nodes connected to each other via a network, in which a plurality of pieces of distribution information are dispersed and stored in the plurality of nodes, a plurality of pieces of location information different from each other, indicative of the locations of the distribution information pieces, and each existing for each of the distribution information pieces are dispersed and stored in the plurality of nodes in a one-to-one corresponding manner, and
in the case where the node that stores the location information transmits the location information in response to a request from another node to the another node, a log of transmission of the location information to the another node is recorded in the node that stores the location information, function as:
a log obtaining means for obtaining the plurality of logs recorded in the node that stores the location information; and
a consideration information generating means for generating consideration information for the provider of the distribution information corresponding to the location information by totaling the plurality of logs obtained.

16. A recording medium in which the charging information generating process program according to claim 13 is computer-readably recorded.

17. A recording medium in which the consideration information generating process program according to claim 14 or 15 is computer-readably recorded.
